# EUROPEAN PATENT SPECIFICATION

(11) **EP 0 545 445 B1**
(45) Date of publication and mention of the grant of the patent: **29.05.1996**
(21) Application number: 92120767.6
(22) Date of filing: 04.12.1992
(51) Int. Cl.: C08L 21/00

(54) **Rubber**
Gummi
Caoutchouc

(30) Priority: 06.12.1991 JP 348650/91
(43) Date of publication of application: 09.06.1993
(73) Proprietor: BRIDGESTONE CORPORATION, Tokyo 104 (JP)
(72) Inventor: Kondo, Hitoshi, Hamura-shi,Tokyo (JP); Kunitomo, Hideo, Chiba-shi,Chiba (JP); Ikeda, Takashi, Ichihara-shi,Chiba (JP)
(74) Representative: Brandes, Jürgen, Dr. rer. nat.

(56) References cited:
- EP-A- 0 197 395
- PATENT ABSTRACTS OF JAPAN vol. 7, no. 281 (C-200)(1426) 15 December 1983
- DATABASE WPIL Section Ch, Week 2991, Derwent Publications Ltd., London, GB; Class A, AN 91-213490

## Description

### BACKGROUND OF THE INVENTION

### Field of the Invention

The present invention relates to a rubber composition, and more particularly, to a rubber composition having compatibly high elasticity and high breaking resistance.

### Description of the Related Art

Rubber products used under dynamic using conditions such as tires and the like are deteriorated by environmental deterioration such as heat, oxygen, light and the like and further by mechanical fatigue, and finally broken resulting in the end of life.

In particular, steel cord coating rubber compositions are suffering from thermal oxidative deterioration as well as mechanical repeating fatigue, and thereby there occurs an accident, so-called belt edge separation, and the product life is shortened.

In order to prevent such deterioration and breaking, it is necessary to prevent the thermal oxidative deterioration and decrease the amount of deformation of rubber products caused by external force. For the purpose of attaining such purposes, it is effective to enhance the eleasticity of the rubber compositions constituting such products.

Heretofore, there are known various methods for making rubber compositions highly elastic, for example, increasing the amount of carbon black to be added, or increasing the amount of a vulcanizing agent such as sulfur or a vulcanization accelerator to enhance the network density.

Indeed, those methods can impart a high elasticity to rubber compositions, but deteriorate breaking resistance represented by eleongation at break, and in addition, in the carbon black increasing method the heat generation property is degraded and the workability is lowered due to the increase in viscosity when non-vulcanized while in the sulfur increasing method, resistance to thermal oxidative deterioration is lowered and the life of the rubber products is rather shortened.

Further, there is known a method of enhancing the elasticity by using both resorcin or phenolic resin and a methylene group donor. In particular, in the case of steel cord coating rubber compositions, there are disclosed improvements in adhesion between steel cord and rubber in Japanese Patent Publication No. 4582/1988, Japanese Patent Application Laid-open No. 160331/1983, and Japanese Patent Publication No. 4332/1980, but these aim at good adhesion between steel cord and rubber only, and it is not contemplated to make high elasticity and breaking resistance of rubber compositions compatible, and therefore, the compatibility is not sufficiently improved.

Heretofore, there have been known copolycondensed resins derived from different phenols such as a copolycondensed resin of xylenol, p-t-octylphenol and formaldehyde, but such copolycondensed resins are not effective for improving the characteristics, that is, high elasticity and breaking resistance of rubber compositions as contemplated by the present invention.

That is, it has been very difficult to render high elasticity and breaking resistance compatible and this difficulty has been a big problem in improving resistance of rubber compositions to external force.

### SUMMARY OF THE INVENTION

An object of the present invention is to provide a rubber composition having a compatibility of high elasticity and high breaking resistance.

Another object of the present invention is to provide a rubber composition exhibiting a compatibility of high elasticity and high breaking resistance and further an improved heat generation property.

According to the present invention, there is provided a rubber composition which comprises 100 parts by weight of a rubber selected from the group consisting of natural rubber, synthetic rubber and a mixture thereof, 0.5 - 10 parts by weight of a novolac resin having a softening point of 90 - 150°C prepared by the copolycondensation of xylenol (A) and a phenol (B) selected from the group consisting phenol, cresol and a mixture thereof at a molar ratio (A/B) ranging from 25/75 to 75/25, by using an aldehyde compound, and 0.5 - 10 parts by weight of a compound capable of donating a methylene group when heated.

### BRIEF DESCRIPTION OF THE DRAWING

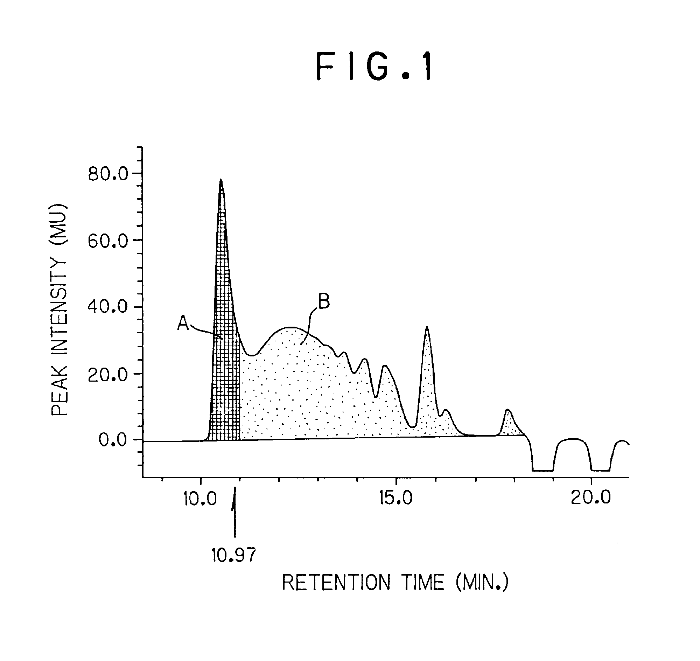

FIG. 1 is a GPC (gel permeation chromatograph) chart showing a proportion of the high molecular weight component in the copolycondensed resin according to the present invention.

### DESCRIPTION OF THE PREFERRED EMBODIMENT

The rubber composition of the present invention is different from compositions obtained from conventional carbon black increasing methods and sulfur increasing methods, and can attain a high compatibility between high elasticity and breaking resistance which could not be attained by conventional methods using resorcin and phenolic resin.

The rubber used in the present invention may be optionally selected from natural rubber, synthetic rubbers and blend rubbers. Exemplary suitable synthetic rubbers include synthetic polyisoprene rubber, styrene-butadiene copolymer rubber, polybutadiene rubber, butyl rubber, and halogenated butyl rubber, but are not limited thereto.

The copolycondensed novolac resin used in the present invention may be prepared by copolycondensing xylenol as component (A), preferably 3,5-xylenol and a phenol as component (B) such as phenol and cresol, preferably phenol, at a molar ratio (A/B) of 25/75 - 75/25, preferably 40/60 - 60/40, by using an aldehyde compound.

As is clear from above, the copolycondensed novolac resin is formed by chemically bonding the three components, xylenol (A), a phenol (B) and an aldehyde compound together. Therefore, for example, a simple blend of a xylenol- aldehyde resin and a phenol-aldehyde resin is not the copolycondensed novolac resin of the present invention.

The aldehyde compound may be formaldehyde, acetaldehyde, benzaldehyde, salicylaldehyde, and acrolein. Formaldehyde is preferable from an industrial point of view since it is economical and safe.

The copolycondensed novolac resin may be prepared, for example, by (i) reacting an aldehyde compound with a mixture of xylenol (A) and a phenol (B), (ii) reacting a reaction product of xylenol (A) and an aldehyde compound with a reaction product of a phenol (B) and an aldehyde compound, (iii) reacting xylenol (A) with a reaction product of a phenol (B) and an aldehyde compound, or (iv) reacting a phenol (B) with a reaction product of xylenol (A) and an aldehyde compound.

When the molar ratio (A/B) of this copolycondensed resin is less than 25/75, that is, the amount of xylenol is much less than that of a phenol, the modulus of elasticity as well as the breaking resistance is lowered.

When the molar ratio (A/B) is larger than 75/25, that is, the amount of xylenol is much larger than that of a phenol, the curing reaction proceeds slowly so that a further increase in elasticity can not be attained, and moreover, the uncured resin remains in the rubber composition so that the heat generation property of the resulting rubber composition is deteriorated.

The softening point of the resin is 90 - 150°C in the present invention. When the softening point is lower than 90°C, the modulus of elasticity is lowered and moreover, there occurs blocking phenomenon during storing the resin.

On the contrary, when the softening point is higher than 150°C, the dispersion in the rubber can not be effected suitably resulting in the lowering of modulus of elasticity and deterioration of the heat generation property

In order to improve the heat generation property of the rubber composition, in a molecular weight distribution, the copolycondensed novolac resin preferably contains a high molecular weight component having a molecular weight in terms of polystyrene of 5200 or more in an amount coresponding to a peak area ratio on a GPC chart of 4 - 30 %.

When the amount of the high molecular weight component is less than 4 %, the effect of improving the heat generation is not sufficient. On the contrary, when the content exceeds 30 %, the softening temperature of the resin becomes so high that the dispersion in a rubber becomes insufficient and the heat generation property is rather deteriorated.

The amount of the high molecular weight component is measured by the method as illustrated in FIG. 1.

FIG. 1 is a GPC chart where the abscissa represents the retention time (min.) while the ordinate represents the peak strength (MU). The sample is a solvent solution of a xylenol-phenol, cresol-aldehyde copolycondensation resin according to the present invention.

The hatched area "A" is the area corresponding to the retention time range shorter than the retention time (10.97 min.) of the standard polystyrene sample A 5000 (molecular weight of 5200).

The total peak area is the sum of the "A" and the dotted area "B".

The ratio of A to (A+B) represents the peak area ratio of the high molecular weight component.

For purposes of improving remarkably each of characteristics of the rubber composition such as elasticity breaking resistance and heat generation property, the resin is preferably a high ortho copolycondensed novolac resin having the ratio (o/p) of ortho bond (o) to para bond (p) of 2 or more.

The catalyst for preparing the high ortho copolycondensed novolac resin may be, for example, an organic acid salt, inorganic acid salt or oxide of divalent metal ion of alkaline earth metals, zinc, manganese, cadmium and the like, and preferably zinc acetate.

The amount of the copolycondensed novolac resin used is 0.5 - 10 parts by weight based on 100 parts by weight of the rubber.

When the amount of said resin is less than 0.5 parts by weight, elasticity is not sufficiently increased by the addition. When the amount of said resin exceeds 10 parts by weight, the increased amount over 10 parts by weight does not exhibit any good effect, and the breaking resistance and heat generation property are rather deteriorated.

According to the present invention, a compound capable of donating a methylene group when heated is incorporated in the composition so as to cure the above-mentioned copolycondensed novolac resin by forming a three dimensional network and impart a high elasticity to the rubber composition.

The compound capable of donating a methylene group when heated may be hexamethylenetetramine, polymeth- ylolmelamine derivatives, oxazoline derivatives, and polymethylol-acetylene urea. Among them, hexamethylenetetramine and polymethylol-melamine derivative are preferable. More particularly polymethylol-melamine derivative is preferable which does not adversely affect the other members and working environment during heating.

The amount of this compound is 0.5 - 10 parts by weight based on 100 parts by weight of the rubber. When the amount is less than 0.5 parts by weight, the effect caused by the addition is not sufficient. On the contrary, when the amount exceeds 10 parts by weight, the incremental amount does not so improve the characteristics of the rubber composition.

In addition to the above-mentioned novolac resin, a compound capable of donating a methylene group when heated, and ordinary reinforcing agents such as carbon black, silica and the like, if necessary, there may be optionally incorporated into the rubber composition antioxidants, softeners, vulcanization accelerators, vulcanization accelerating auxiliaries, sulfur or adhesive promotors which are usually used in rubber industry.

As mentioned above, according to the present invention, the rubber composition has compatibly high elasticity and high breaking resistance.

In addition, the rubber composition has compatibly high elasticity, high breaking resistance, and an improved heat generation property. Further, the elongation upon breaking is also improved.

The rubber composition of the present invention is suitable for tires, conveyor belts, hoses and the like Further, the rubber composition of the present invention can be effectively used at a portion which is subjected to a thermal oxidative deterioration and a mechanical repeated load, for example, a rubber composition covering steel cords of tires.

The present invention is now more particularly described with reference to the following examples which are for the purpose of illustration only and are intended to imply no limitation thereon.

Firstly there are explained the processes for preparing resins used. All parts and percentages are by weight in the following unless otherwise specified.

### Resin Preparation Example 1

3,5-Xylenol 366 parts, 41.5 % formalin 151.8 parts, and oxalic acid 0.73 parts were reacted at a temperature of the boiling point of the reaction mixture or higher under reflux for 3 hours. After completion of the reaction, the reaction fluid was heated up to 180°C at ordinary temperature while removing water, and further, unreacted xylenol was removed under reduced pressure to obtain 374 parts of novolac resin having a softening point (ring and ball method) of 100°C.

The resulting resin was analyzed using tetrahydrofuran as a solvent under the following conditions by means of a GPC apparatus to measure the content of the high molecular weight component.

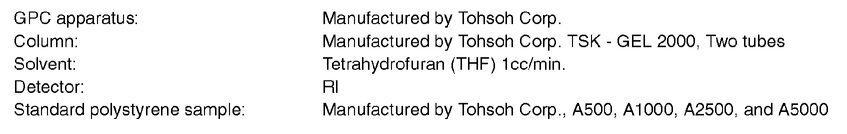

There was measured the content of the high molecular weight component having a molecular weight of 5200 or more in terms of polystyrene (hereinafter referred to as "high molecular weight component") in the resin as a peak area ratio on the GPC chart according to the following procedure.

The time "10.97 min." in the GPC chart in FIG. 1 corresponding to the retention time of the standard polystyrene sample A5000 (molecular weight of 5200) is taken as a standard, and the content of the high molecular weight component is calculated by the following formula:
Peak area ratio (%) = [A/(A+B)] x 100

where A is a peak area corresponding to the retention time shorter than the standard, i.e. the region of molecular weight higher than the molecular weight corresponding the standard, and (A + B) is the total peak area.

As a result of the analysis, the content of the high molecular weight component of this resin was 1.0 %.

### Resin Preparation Example 2

Phenol 188 parts, 41.5 % formalin 115.7 parts (hereinafter referred to as "primary formalin"), and oxalic acid 1.84 parts were mixed and reacted at a boiling temperature of the reaction system or higher under reflux for 15 min. and then quenched followed by keeping the reaction fluid at 60 - 70°C for one hour.

Then, 3,5-xylenol 732 parts was added to the resulting reaction fluid and the temperature was raised, and the reaction was carried out under reflux for 2 hours while 41.5 % formalin 316.6 parts (hereinafter referred to as "secondary formalin") was gradually added thereto.

After completion of the reaction, the temperature was raised up to 180°C while removing water at ordinary pressure and then the unreacted phenol, and xylenol were removed at a reduced pressure to obtain a copolycondensed novolac resin (916 parts) having a softening temperature (ring and ball method) of 116°C and containing 5.2 % of high molecular weight component.

The reaction proportion of xylenol (A) to phenol (B) (hereinafter simply referred to as "reaction proportion" unless otherwise stated) was calculated from the amounts of xylenol and phenol fed and the amounts of unreacted xylenol and phenol recovered by distillation at a reduced pressure. The resulting molar ratio (A/B) was 27 : 73.

### Resin Preparation Example 3

The prodedure of Resin Preparation Example 2 was repeated except that there were used phenol 282 parts, primary formalin 173.5 parts, oxalic acid 2.59 parts, 3,5-xylenol 366 parts, and secondary formalin 156.2 parts, and there was produced 634 parts of a copolycondensed novolac resin of reaction proportion of 54 : 46, having a softening temperature of 117°C and containing 9.0 % of the high molecular weight component.

### Resin Preparation Example 4

The procedure of Resin Preparation Example 2 was repeated except that there were used phenol 567 parts, primary formalin 347 parts, oxalic acid 3.23 parts, 3,5-xylenol 244 parts and secondary formalin 86.7 parts, and there was obtained a copolycondensed novolac resin (783 parts) of reaction proportion of 78 : 22, having a softening point of 110°C and containing 9.0 % of the high molecular weight component.

### Resin Procurement Example 5

As a phenol novolac resin, there was used PLYOPHEN GH-6059 munufactured by DAINIPPON INK & CHEMICALS INC.

This resin had a softening point of 114°C and contained 22.4 % of the high molecular weight component.

### Resin Preparation Example 6

The procedure of Resin Preparation Example 2 was repeated except that phenol 282 parts, primary formalin 173.5 parts, oxalic acid 2.59 parts, 3,5-xylenol 366 parts, and secondary formalin 86.7 parts were used, and there was obtained a copolycondensed novolac resin (600 parts) of reaction proportion of 52: 48, having a softening point of 80°C and containing 2.0 % of the high molecular weight component.

### Resin Preparation Example 7

The procedure of Resin Preparation Example 2 was repeated except that there were used phenol 282 parts, primary formalin 195.2 parts, oxalic acid 2.59 parts, 3,5-xyienoi 366 parts and secondary formalin 216.9 parts, and there was obtained a copolycondensed novolac resin (662 parts) of reaction proportion of 54: 46, having a softening point of 154°C and containing 35.2 % of the high molecular weight component.

### Resin Preparation Example 8

The procedure of Resin Preparation Example 2 was repeated except that phenol 282 parts, primary formalin 173.5 parts, oxalic acid 2.59 parts, 3,5-xylenol 366 parts, and secondary formalin 151.8 parts, and there was obtained a copolycondensed novolac resin (655 parts) of reaction proportion of 54: 46, having a softening point of 138°C and containing 26.4 % of the high molecular weight component.

### Resin Preparation Example 9

The procedure of Resin Preparation Example 2 was repeated except that there were metha-cresol 324 parts, primary formalin 173.5 parts, oxalic acid 2.59 parts, 3,5-xylenol 366 parts, and secondary formalin 156.2 parts, there was obtained a copolycondensed novolac resin (673 parts) of reaction proportion of 51 : 49 [xylenol (A): cresol (B)], having a softening temperature of 138°C and containing 3.0 % of the high molecular weight component

### Resin Preparation Example 10

Xylenol novolac resin of Resin Preparation Example 1 500 parts and phenol novolac resin of Resin Procurement Example 5 500 parts were heated to 180°C to melt and mix, and there was obtained a mixture having a softening point of 106°C and containing 15 % of the high molecular weight component.

### Resin Preparation Example 11

Phenol 282 parts, 41.5 % formalin 173.5 parts, and zinc acetate 3.24 parts were reacted under reflux for 6 hours at a boiling point of the mixture or higher, then quenched and kept at 60 - 70°C for one hour.

And then 3,5-xylenol 366 parts and 41.5 % formalin 111.4 parts were gradually added to the above-mentioned reaction mixture. While removing water at ordinary pressure, the resulting mixture was heated to 110°C, and then reacted under reflux for 3 hours.

Further, while removing water at ordinary pressure, the mixture was heated to 120°C and reacted under reflux for 3 hours again. Then, still further while removing water at ordinary pressure, the mixture was heated to 140 °C and reacted under reflux for 3 hours again.

After completion of the reaction, while removing water at ordinary pressure, the mixture was heated to 180°C, and then unreacted phenol and xylenol were removed at reduced pressure, and there was obtained a high ortho copolycondensed resin (523 parts) of reaction proportion of 54 : 46, having a softening point (ring and ball method) of 120°C and containing 1.0 % of the high molecular weight component.

The ratio (o/p) of ortho bond to para bond of the resulting resin was calculated from the ratio of peak strength of the remaining methine group of phenol nucleus to that of xylenol nucleus determined by means of ¹³C-NMR. As a result, the o/p ratio was 2.3.

### Resin Preparation Example 12

p-t-Octylphenol 618 parts, primary formalin 173.5 parts, and oxalic acid 2.59 parts were reacted under reflux for 60 min. and further 3,5-xylenol 366 parts and secondary formalin 156.2 parts were used. Then the reaction was carried out in the same manner as in Resin Preparation Example 2 to produce a copolycondensed novolac resin (634 parts) having a softening point 132°C and containing 7.5 % of the high molecular weight component.

### EXAMPLES 1 - 6 and COMPARATIVE EXAMPLES 1 - 6

To 100 parts of a rubber prepared by blending 80 parts of natural rubber and 20 parts of synthetic polyisoprene rubber were added 55 parts of HAF carbon black, one part of aroma oil, 10 parts of zinc oxide, 1.5 parts of Santoflex 13 (trade name, manufactured by Monsanto), 2.0 parts of cobalt naphthenate, 1.0 parts of N-tert-butyl-2-benzothiazolyl sulfenamide, and 5 parts of sulfur.

The resulting rubber composition was compounded with 1.5 parts of each of the resins in Tables 1 - 3 and the predermined amount of hexamethoxymethylmelanine.

Each of the resulting 12 kinds of rubber compositions was formed into a sheet of 2 mm thick, which was then vulcanized at 145°C for 40 min.

The dynamic modulus of elasticity (E', tan 6) at room temperature of each of the sheets thus vulcanized was measured under conditions: initial load of 160 g; dynamic strain of 1 % and frequency 50 Hz by means of a viscoelastic meter manufactured by Iwamoto Seisakusho.

In addition, the tensile strength thereof was measured according to JIS K 6301 and the elongation upon breaking was also measured.

The results are shown in Tables 1, 2 and 3. Further in Table 1 are listed Conventional Example 1 where no resin was compounded, Conventional Example 2 where the amount of sulfur was increased up to 7 parts, and Conventional Example 3 where the amount of carbon black was increased up to 70 parts.

In Tables 1, 2 and 3 are listed Comparative Example 1 where xylenol alone was used, Comparative Example 2 where phenolic resin alone was used, Comparative Example 3 where the softening point was too low, Comparative Example 4 where the softening point was too high, Comparative Example 5 where copolycondensation was not carried out, and Comparative Example 6 where neither phenol nor cresol was used.

The results are shown by an index assuming that the value of the result of Conventional Example 1 is 100. The larger the value, the better the result

As is clear from the results in Tables 1, 2 and 3, the rubber compositions of the present invention shown in Examples can attain high compatibility of high elasticity and breaking resistance, and moreover have an excellent heat generation property

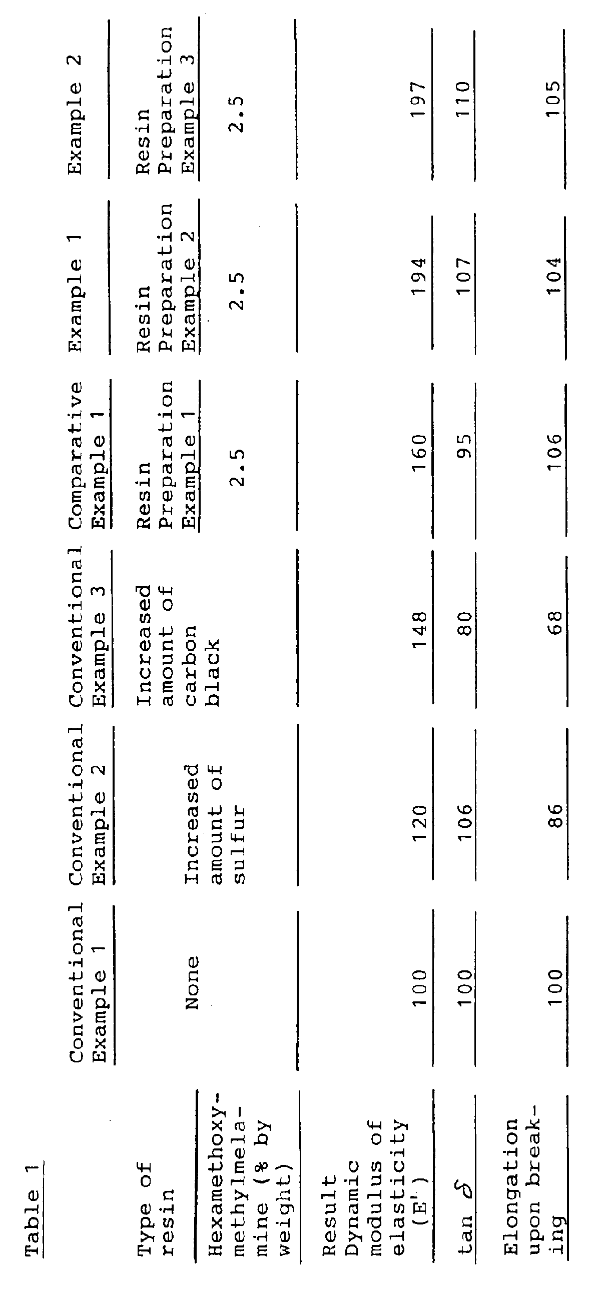

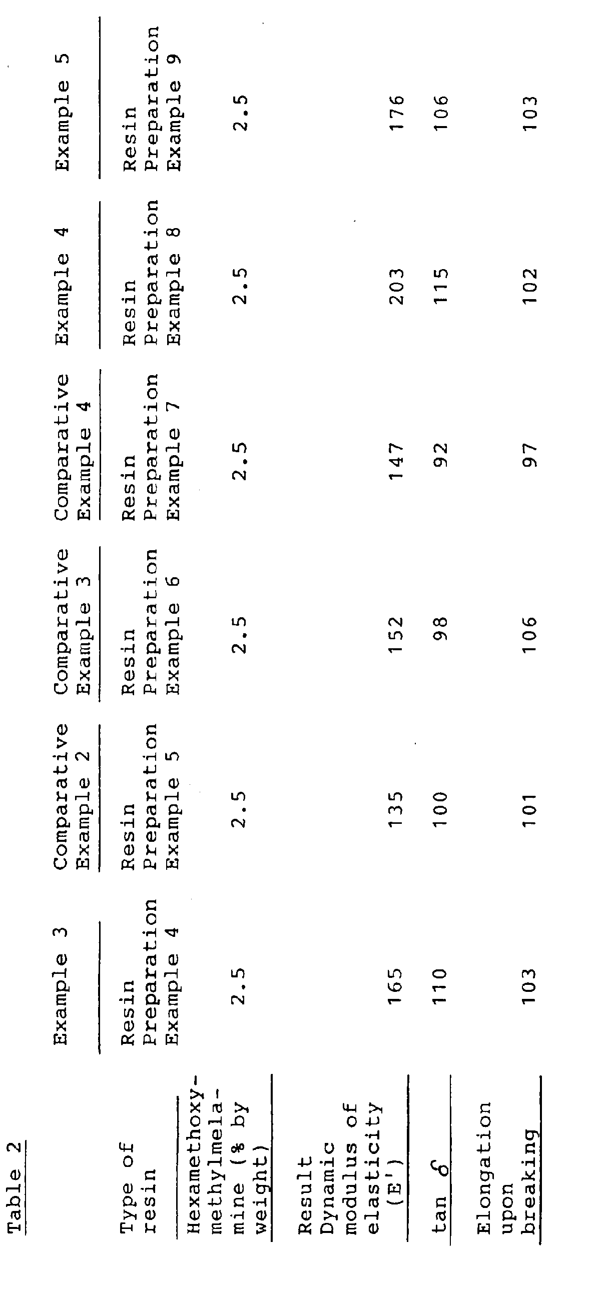

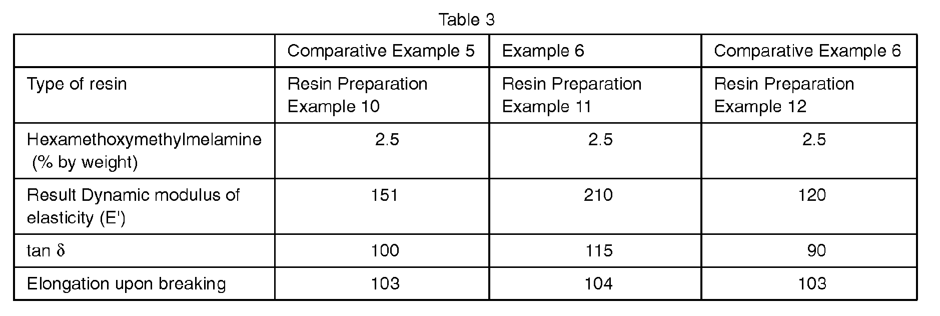

### EXAMPLES 7 - 10. COMPARATIVE EXAMPLES 7 - 10

One hundred parts of a rubber prepared by blending 50 parts of natural rubber and 50 parts of styrene-butadiene copolymer rubber was mixed with 40 parts of ISAF carbon black, 2 parts of stearic acid, 13.40 parts of Santoflex, 3 parts of zinc oxide, 1.0 parts of N-tert-butyl-2-benzothiazolylsulfenamide and 1.5 parts of sulfur. The resulting rubber composition was compounded with various amounts of resins of Resin Preparation Examples 1 - 5 and hexamethoxymethylmelamine, and evaluation was effected in a way similar to Example 1.

The results are shown in Table 4. For comparison, there are also shown in Table 4 Conventional Example 4 where neither resin nor melamine was compounded and Conventional Example 5 where the amount of carbon black was increased up to 50 parts.

The results are shown by an index assuming that the value of the result of Conventional Example 4 is 100. The larger the value, the better the result. In Comparative Example 7 there was used a xylenol resin alone and in Comparative Example 8 there was used a phenolic resin alone.

Neither the amount of hexamethoxymethylmelamine in Comparative Example 9 nor the amount of the resin in Comparative Example 10 is within the range of the present invention.

As is clear from the results in Table 4, the rubber compositions of the present invention shown in Examples can attain high compatibility of high elasticity and breaking resistance, and moreover have an excellent heat generation property.

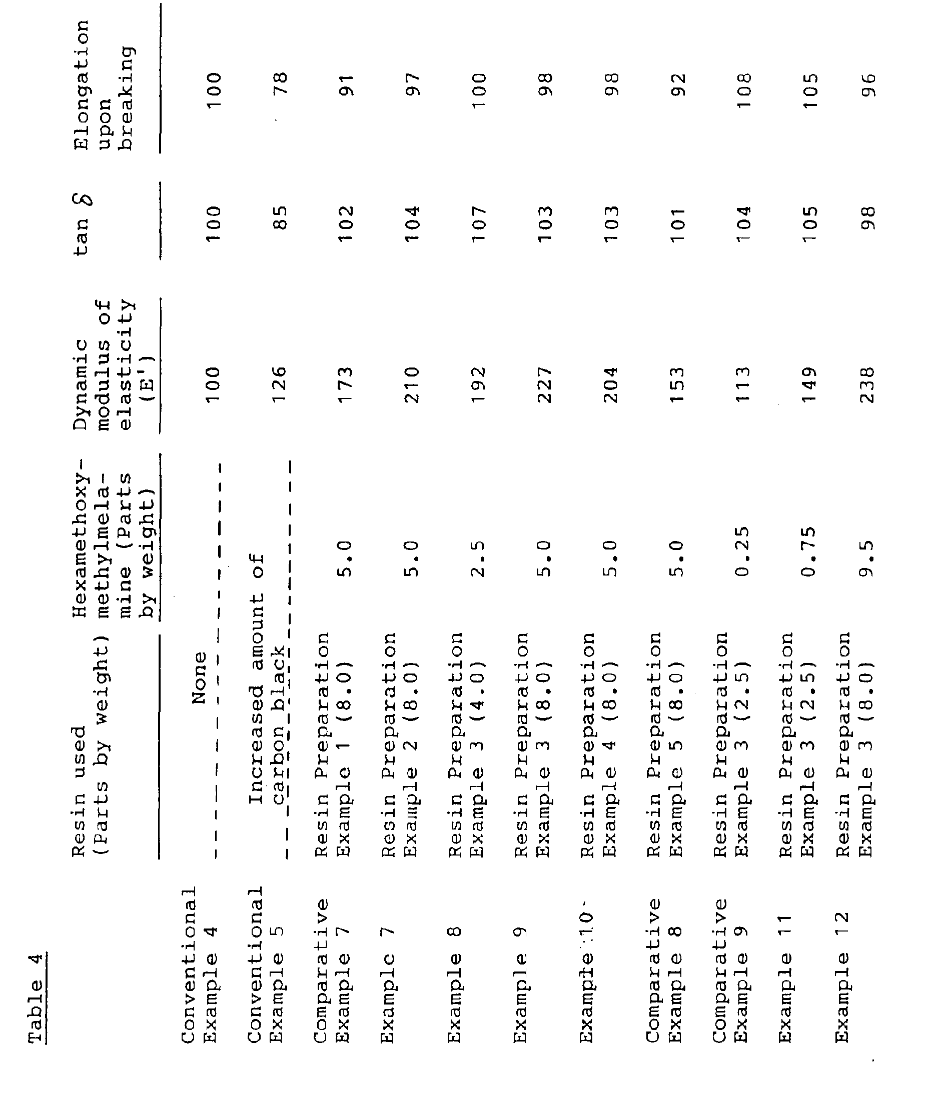

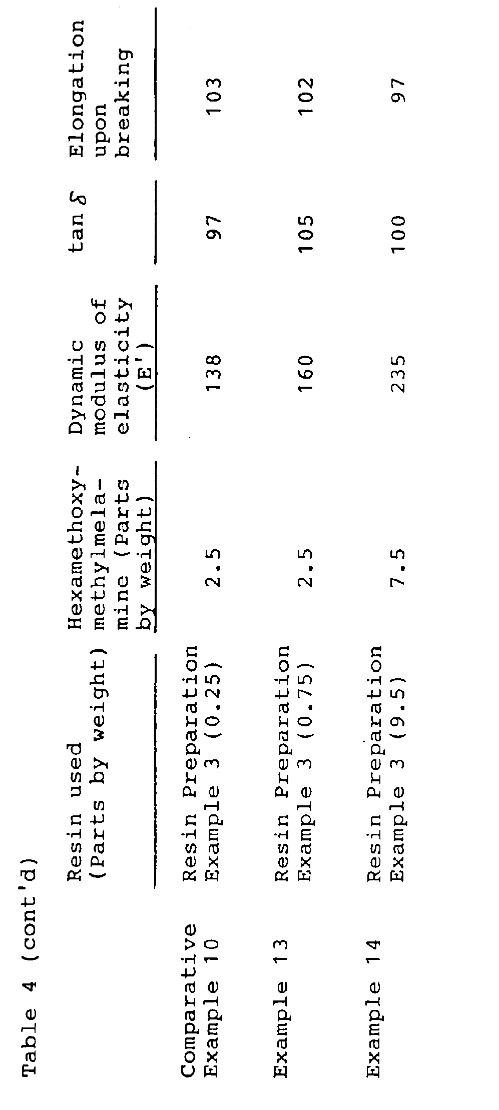

## Claims

1. A rubber composition which comprises 100 parts by weight of a rubber selected from the group consisting of natural rubber, synthetic rubber and a mixture thereof, 0.5 - 10 parts by weight of a novolac resin having a softening point of 90 - 150°C prepared by the copolycondensation of xylenol (A) and a phenol (B) selected from the group consisting of phenol, cresol and a mixture thereof at a molar ratio (A/B) ranging from 25/75 to 75/25, by using an aldehyde compound, and 0.5 - 10 parts by weight of a compound capable of donating a methylene group when heated.

2. The rubber composition according to claim 1 in which the xylenol (A) is 3,5-xylenol.

3. The rubber composition according to claim 1 in which the molar ratio of xylenol (A) to a phenol (B) ranges from 40/60 to 60/40.

4. The rubber composition according to claim 1 in which the copolycondensed novolac resin contains a high molecular weight component having a molecular weight in terms of polystyrene of 5200 or more in an amount coresponding to a peak area ratio on a GPC (gel permeation chromatograph chart of 4 - 30 %.

5. The rubber composition according to claim 1 in which the copolycondensed novolac resin prepared from xylenol (A) and a phenol (B) is a high-ortho copolycondensed novolac resin having a ratio (o/p) of ortho bond to para bond of 2 or more.

6. The rubber composition according to claim 1 in which the compound capable of donating a methylene group is at least one member selected from the group consisting of hexamethylenetetramine, polymethylol-melamine derivatives, oxazoline derivatives, and polymethylol-acetylene urea.

## Patentansprüche

1. Kautschukzusammensetzung, welche 100 Gew.-Teile eines Kautschuks, der aus der aus natürlichem Kautschuk, synthetischem Kautschuk und einer Mischung davon bestehenden Gruppe gewählt wird, 0,5 - 10 Gew-Teile eines Novolakharzes mit einem Erweichungspunkt von 90 bis 150°C, hergestellt durch die Copolykondensation von Xylenol (A) und einem aus der aus Phenol, Cresol und einer Mischung davon bestehenden Gruppe gewählten Phenol (B) in einem Molverhältnis (A/B) im Bereich von 25/75 bis 75/25 unter Verwendung einer Aldehydverbindung, und 0,5 - 10 Gew.-Teile einer Verbindung, die zurZuführung einer Methylgruppe beim Erhitzen in der Lage ist.

2. Kautschukzusammensetzung gemäß Anspruch 1, worin das Xylenol (A) 3,5-Xylenol ist.

3. Kautschukzusammensetzung gemäß Anspruch 1, worin das Molverhältnis von Xylenol (A) zu einem Phenol (B) im Bereich von 40/60 bis 60/40 liegt.

4. Kautschukzusammensetzung gemäß Anspruch 1, worin das copolykondensierte Novolakharz eine hochmolekulargewichtige Komponente mit einem Molekulargewicht, bezogen auf Polystyrol, von 5200 oder mehr in einer Menge enthält, die einem Peak-Flächenverhältnis im GPC (Gelpermeationschromatographie)-Diagramm von 4 - 30% entspricht.

5. Kautschukzusammensetzung gemäß Anspruch 1, worin das aus Xylenol (A) und einem Phenol (B) hergestellte copolykondensierte Novolakharz ein copolykondensiertes Novolakharz mit hohem ortho-Anteil ist, das ein Verhältnis von ortho-Bindung zur para-Bindung (o/p) von 2 oder mehr aufweist.

6. Kautschukzusammensetzung gemäß Anspruch 1, worin die Verbindung, welche zur Zufuhrung einer Methylengruppe in der Lage ist, mindestens ein aus der aus Hexamethylentetramin, Polymethylol-Melamin-Derivaten, Oxazolin-Derivaten und Polymethylolacetylenharnstoffbestehenden Gruppe gewählter Vertreter ist.

## Revendications

1. Composition de caoutchouc comprenant 100 parties en poids d'un caoutchouc choisi dans le groupe comprenant le caoutchouc naturel, le caoutchouc synthétique et un mélange de ceux-ci, 0,5 - 10 parties en poids d'une résine novolac ayant un point de ramollissement de 90 - 150°C préparée par copolycondensation de xylénol (A) et d'un phénol (B) choisi dans le groupe comprenant le phénol, le crésol et un mélange de ceux-ci dans une proportion molaire (A/B) compris entre 25/75 et 75/25, en utilisant un composé d'aldéhyde, et 0,5 - 10 parties en poids d'un composé pouvant donner un groupe méthylène lorsqu'il est chauffé.

2. Composition de caoutchouc selon la revendication 1 dans laquelle le xylénol (A) est du 3,5-xylénol.

3. Composition de caoutchouc selon la revendication 1 dans laquelle la proportion molaire du xylénol (A) au phénol (B) est comprise entre 40/60 et 60/40.

4. Composition de caoutchouc selon la revendication 1 dans laquelle la résine novolac copolycondensée contient un composant de poids moléculaire élevé ayant un poids moléculaire en termes de polystyrène de 5200 ou plus dans une proportion correspondant à un rapport de surface de pic sur un GPC (chromatographe à imprégnation de gel) de 4 - 30 %.

5. Composition de caoutchouc selon la revendication 1 dans laquelle la résine novolac copolycondensée préparée à partir de xylénol (A) et d'un phénol (B) est une résine novolac copolycondensée hautement ortho ayant un taux (o/p) de liaisons ortho à liaisons para de 2 ou plus.

6. Composition de caoutchouc selon la revendication 1 dans laquelle le composé pouvant donner un groupe de méthylène est au moins un membre du groupe comprenant l'hexaméthylène tétramine, les dérivés de polyméthylol- mélamine, les dérivés d'oxazoline, et le polyméthylol-acétylène-urée.
